# EUROPÄISCHE PATENTANMELDUNG

(11) **EP 1 526 052 A1**
(43) Veröffentlichungstag der Anmeldung: **27.04.2005**
(21) Anmeldenummer: 04022413.1
(22) Anmeldetag: 21.09.2004
(51) Int. Cl.: B60T 8/36, F16F 15/08, B62D 27/04

(54) **Schwingungsdämpfende Aggregathaltevorrichtung**

(30) Priorität: 24.10.2003 DE 10349702
(71) Anmelder: DaimlerChrysler AG, 70567 Stuttgart (DE)
(72) Erfinder: Beck, Erich, 73099 Adelberg (DE)

(57) **Zusammenfassung**

Es wird eine Vorrichtung (1) zur schwingungsdämpfenden Halterung eines Aggregats (3) an einem Fahrzeugbauteil (5), mit einer Aggregat-Haltekonsole (7), die mittels mindestens zweier durch Steckmontage hergestellter Befestigungsstellen (9,11,13) am Fahrzeugbauteil (5) lagefest befestigbar ist, wobei die Steckrichtungen der beiden Befestigungsstellen (9,11,13) in nicht paralleler Richtung zueinander verlaufen und wobei mindestens eine der Befestigungsstellen (9,11,13) einen Verankerungszapfen (15,45) und eine in einer ersten Bauteilöffnung (33) angeordnete Dämpfungshülse (23) umfasst, in die der Verankerungszapfen (15,45) im montierten Zustand der Aggregat-Haltekonsole (7) eingesteckt ist, vorgeschlagen. Die Vorrichtung (1) zeichnet sich dadurch aus, dass der Verankerungszapfen (45) als separates Bauteil ausgeführt ist und im montierten Zustand der Aggregat-Haltekonsole (7) eine zweite Bauteilöffnung (47) durchgreift.

## Beschreibung

Die Erfindung betrifft eine Vorrichtung zur schwingungsdämpfenden Halterung eines Aggregats an einem Fahrzeugbauteil, gemäß Oberbegriff des Anspruchs 1.

Aus der DE 43 24 099 C1 geht eine Vorrichtung der hier angesprochenen Art hervor, die zur schwingungsdämpfenden Halterung eines Aggregats, beispielsweise einer Hydraulikeinheit eines Antiblockiersystems oder einer Antriebs-Schlupf-Regelungseinrichtung im Motorraum eines Kraftfahrzeugs dient. Es ist eine an der Kraftfahrzeugkarosserie angeschweißte Aggregat-Haltekonsole vorgesehen, an welcher das Aggregat mittels einer Dreipunktlagerung befestigt ist. Zwei der Befestigungsstellen weisen jeweils einen schwingungsisolierenden, das heißt geräuschdämmenden Gummipuffer auf, die jeweils an einem fest mit dem Aggregat verbundenen Verankerungszapfen gehalten sind. Die dritte Befestigungsstelle weist eine Dämpfungshülse auf, die in einer in der Aggregat-Haltekonsole vorgesehenen ersten Bauteilöffnung angeordnet ist und in die der am Aggregat vorgesehene Verankerungszapfen im montierten Zustand eingreift. Die Verankerungszapfen der ersten und zweiten Befestigungsstellen weisen gleiche Steckrichtungen auf, während die Steckrichtung des dritten Verankerungszapfens waagerecht dazu verläuft. Auf Grund dieser Ausgestaltung muss das Aggregat bei seiner Montage gekippt werden, um die Verankerungszapfen in die vorgesehenen Lageröffnungen quasi einzufädeln, was sich auf Grund der begrenzten Platzverhältnisse im Motorraum des Kraftfahrzeugs häufig als schwierig gestaltet und eines erheblichen Kraftaufwandes bedarf.

Es ist Aufgabe der Erfindung, eine Alternative zu der Vorrichtung der eingangs genannten Art zu schaffen.

Zur Lösung der Aufgabe wird eine Vorrichtung mit den Merkmalen des Anspruchs 1 vorgeschlagen. Diese umfasst mindestens zwei Befestigungsstellen, die durch Steckmontage herstellbar sind, um die Aggregat-Haltekonsole am Fahrzeugbauteil oder das Aggregat an der am Fahrzeugbauteil befestigten oder daran ausgebildeten Aggregat-Haltekonsole lagefest zu fixieren, wobei die Steckrichtungen der beiden Befestigungsstellen in nicht paralleler Richtung, vorzugsweise in senkrechter Richtung zueinander verlaufen. Zumindest eine der Befestigungsstellen weist einen Verankerungszapfen und eine in einer ersten Bauteilöffnung angeordnete Dämpfungshülse auf, in die der Verankerungszapfen im montierten Zustand der Aggregat-Haltekonsole eingreift. Die Vorrichtung zeichnet sich dadurch aus, dass der Verankerungszapfen als separates Bauteil ausgebildet ist und im montierten Zustand der Aggregat-Haltekonsole beziehungsweise des Aggregats eine zweite Bauteilöffnung durchgreift. Der Verankerungszapfen wird also nachträglich, das heißt nachdem die andere Befestigungsstelle durch Steckmontage hergestellt ist, in der dafür vorgesehenen Weise durch Steckmontage verbaut, wodurch sowohl die zweite Befestigungsstelle hergestellt als auch die gesamte Montageeinheit, umfassend unter anderem die Aggregat-Haltekonsole, dauerhaft und sicher mit dem Fahrzeugbauteil verriegelt ist. Die Vorteile der erfindungsgemäßen Vorrichtung bestehen unter anderem darin, dass die Montage der Aggregat-Haltekonsole beziehungsweise des Aggregats vereinfacht ist, da diese/dieses anders als bei der bekannten Vorrichtung zur Ausbildung der Befestigungsstelle durch Steckmontage nicht gekippt werden muss. Daher kann das Aggregat auch bei engen Platzverhältnissen am Einbauort schnell und in einfacher Weise verbaut werden. Da sich der Verankerungszapfen nur dann durch die zweite Bauteilöffnung durchführen lässt und in die in der ersten Bauteilöffnung angeordnete Dämpfungshülse eingreifen kann, wenn eine fluchtende Anordnung dieser Bauteilöffnungen besteht, kann eine nicht korrekte Montage praktisch ausgeschlossen werden. Der Verankerungszapfen dient hierbei also gleichzeitig auch als Mittel zum Anzeigen des Verriegelungszustandes.

Es ist festzuhalten, dass im Servicefall eine leichte Demontage der Aggregat-Haltekonsole beziehungsweise des Aggregats möglich ist. Hierzu muss der Verankerungszapfen lediglich aus der zweiten Bauteilöffnung wieder herausgezogen werden, so dass die Aggregat-Haltekonsole vom Fahrzeugbauteil beziehungsweise das Aggregat von der Aggregat-Haltekonsole abgenommen werden kann.

In bevorzugter Ausführungsform befindet sich die erste Bauteilöffnung am Fahrzeugbauteil und die zweite Bauteilöffnung an der Aggregat-Haltekonsole. Selbstverständlich ist es auch möglich, dass die die Dämpfungshülse aufweisende erste Bauteilöffnung an der Aggregat-Haltekonsole vorgesehen ist und sich die zweite Bauteilöffnung am Fahrzeugbauteil befindet.

Nach einer ersten Ausführungsvariante ist vorgesehen, dass die Aggregat-Haltekonsole ein separates Bauteil ist, an dem das Aggregat in geeigneter Weise befestigt ist. Nach einer anderen Ausführungsvariante ist vorgesehen, dass die Aggregat-Haltekonsole von einem Gehäuse beziehungsweise einem Gehäuseabschnitt des Aggregats gebildet ist. Den ersten und zweiten Ausführungsvarianten ist gemeinsam, dass die Aggregat-Haltekonsole mittels der mindestens zwei durch Steckmontage hergestellten Befestigungsstellen am Fahrzeugbauteil lagefest angebracht wird. Nach einer dritten Ausführungsvariante, wie aus der DE 43 24 099 C1 bekannt, ist die Aggregat-Haltekonsole am Fahrzeugbauteil fest angebracht, beispielsweise angeschweißt, und das Aggregat wird mittels der mindestens zwei durch Steckmontage hergestellten Befestigungsstellen an der Aggregat-Haltekonsole befestigt.

Bei dem mittels der Vorrichtung an dem Fahrzeugbauteil schwingungsdämpfend befestigbaren Aggregat kann es sich beispielsweise um ein elektrohydraulisches Aggregat einer Fahrzeugbremsanlage handeln. Ein derartiges Aggregat umfasst üblicherweise mindestens einen Hydraulikblock, in dem Magnetventile, Hydraulikpumpen und sonstige hydraulische Bauelemente integriert sind. Zum Antrieb der Hydraulikpumpen ist üblicherweise ein Elektromotor am Hydraulikblock angebracht. An dem Hydraulikblock werden hydraulische Bremsleitungen der Fahrzeugbremsanlage angeschlossen. Das elektrohydraulische Aggregat wird beispielsweise im Zusammenhang mit einem Antiblockier-System (ABS) und/oder einer Antriebs-Schlupf-Regeleinrichtung (ASR) eingesetzt. Das Aggregat ist üblicherweise im Motorraum des Fahrzeugs untergebracht.

Besonders bevorzugt wird ein Ausführungsbeispiel der Vorrichtung, das sich dadurch auszeichnet, dass alle Befestigungsstellen der Aggregat-Haltekonsole hinsichtlich Anzahl und Ausgestaltung ihrer Teile identisch ausgebildet sind. Auf Grund der reduzierten Variantevielfalt der Teile ist die Vorrichtung kostengünstig herstellbar.

Weitere vorteilhafte Ausführungsbeispiele der Vorrichtung ergeben sich aus Kombinationen der in den Unteransprüchen genannten Merkmale.

Die Erfindung wird im Folgenden anhand der Zeichnungen näher erläutert. Es zeigen:
- Fig. 1: eine perspektivische Darstellung eines Ausführungsbeispiel einer Aggregat-Haltekonsole im nicht montiertem Zustand und
- Fig. 2: in perspektivischer Darstellung die Aggregat-Haltekonsole gemäß Figur 1 im montiertem Zustand und
- Fig. 3: einen Ausschnitt der montierten Aggregat-Haltekonsole im Bereich einer Befestigungsstelle.

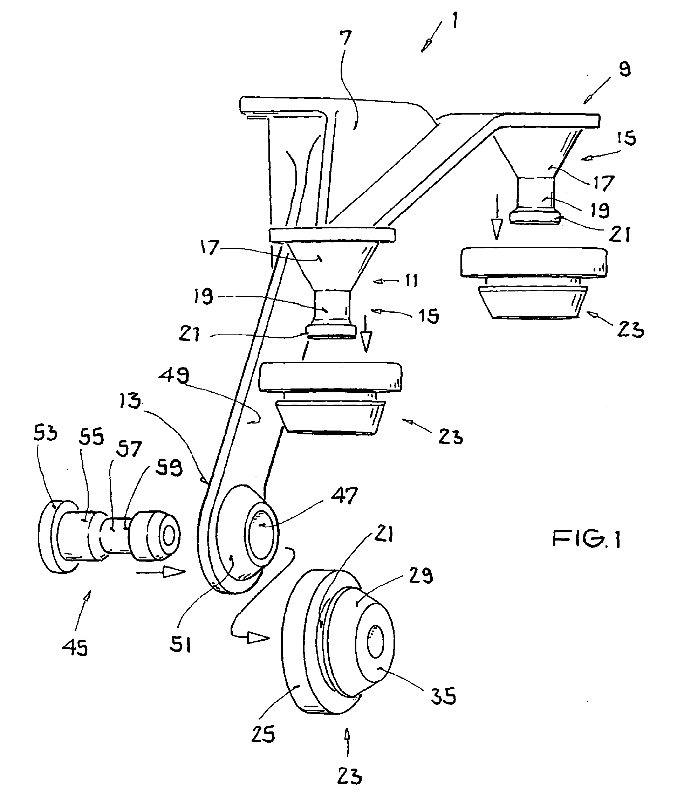

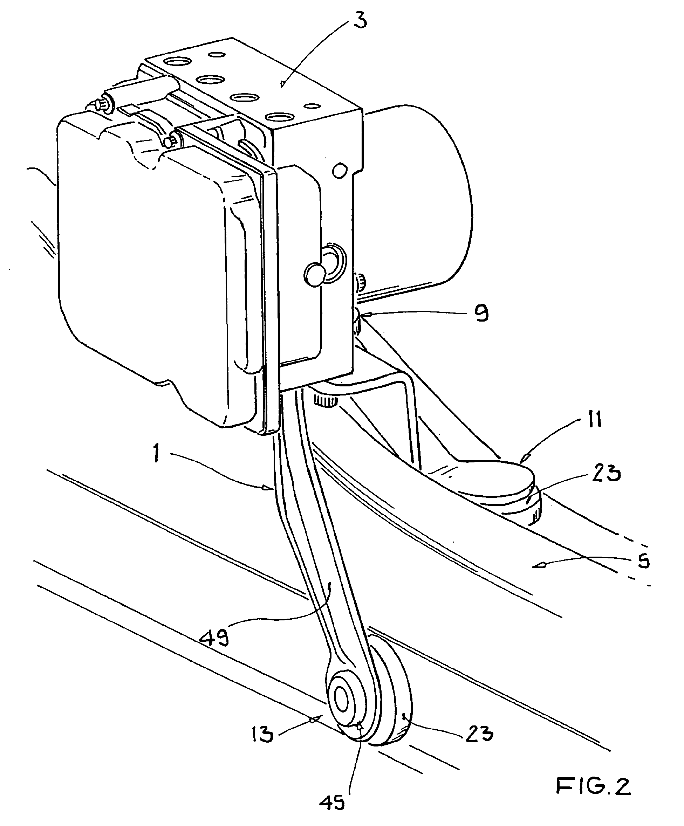

Figur 1 zeigt ein Ausführungsbeispiel einer Vorrichtung 1 zur schwingungsdämpfenden Halterung eines in Figur 2 dargestellten Aggregats 3 an einem Fahrzeugbauteil 5. Das Aggregat 3 ist bei diesem Ausführungsbeispiel von einer Hydraulikeinheit gebildet. Das Fahrzeugbauteil 5 ist hier ein Karosseriebauteil, das sich beispielsweise im Motorraum des nicht näher dargestellten Kraftfahrzeugs befindet.

Die Vorrichtung 1 umfasst eine Aggregat-Haltekonsole 7, an der das Aggregat 3 befestigt, beispielsweise angeschraubt ist. Die Aggregat-Haltekonsole 7 ist mittels durch Steckmontage hergestellter Befestigungsstellen 9, 11 und 13 am Fahrzeugbauteil 5 lagefest befestigbar. Die Befestigungsstellen 9 bis 13 befinden sich bei diesem Ausführungsbeispiel in verschiedenen räumlichen Positionen, was durch die Formgebung des Fahrzeugbauteils 5 bedingt ist, an dem die Aggregat-Haltekonsole 7 mittels der Vorrichtung 1 geräuschentkoppelt anbringbar ist.

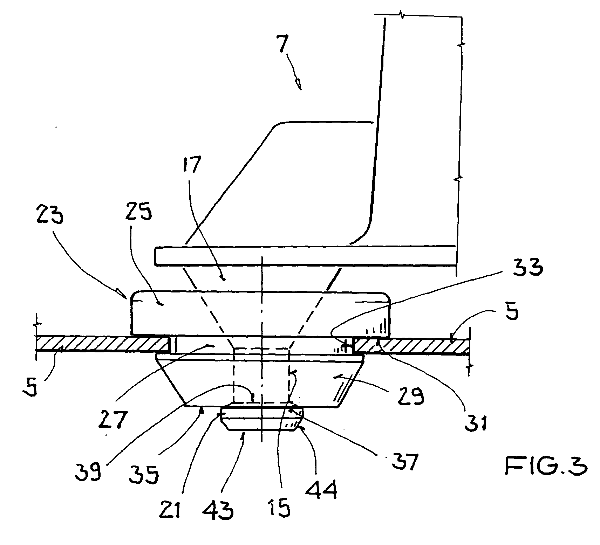

Die Befestigungsstellen 9 und 11 sind identisch ausgebildet und weisen jeweils einen einstückig an der Aggregat-Haltekonsole 7 ausgebildeten Verankerungszapfen 15 auf, die an ihrem an der Aggregat-Haltekonsole 7 festgelegten Ende jeweils einen Kegelstumpfabschnitt 17 aufweisen, der sich ausgehend vom Anbringungsbereich an der Aggregat-Haltekonsole 7 zum anderen, freien Ende des jeweiligen Verankerungszapfens 15 hin verjüngt. An den Kegelstumpfabschnitt 17 schließt sich koaxial ein zylindrischer Abschnitt 19 an, der in einem radial zu diesem erweiterten Sicherungsbund 21 ausläuft. Im montierten Zustand der Aggregat-Haltekonsole 7 werden die Verankerungszapfen 15 jeweils in eine elastische, beispielsweise aus Gummi bestehende Dämpfungshülse 23 eingesteckt, die in jeweils einer im Fahrzeugbauteil 5 vorgesehenen ersten Bauteilöffnung 33 eingesetzt sind, worauf nachfolgend anhand der Figur 3 näher eingegangen wird.

Die Dämpfungshülsen 23 haben die Aufgabe, die vormontierbare Baueinheit, umfassend das Aggregat 3 und die Aggregat-Haltekonsole 7, elastisch und daher gegenüber dem Fahrzeugbauteil 5 schwingungsisolierend aufzunehmen.

In Figur 3 ist ein Ausschnitt der Aggregat-Haltekonsole 7 im am Fahrzeugbauteil 5 montierten Zustand dargestellt. Es ist ersichtlich, dass die Dämpfungshülse 23 in der Art eines Bolzens mit einem kreisscheibenförmigen Kopf 25 und einem an diesen sich anschließenden Schaft 27 ausgebildet ist. Der Schaft 27 weist an seinem freien Ende eine vorspringende Umfangsschulter 29 auf, die zum Ende hin abgeschrägt ist. Im montierten Zustand liegt der Kopf 25 der Dämpfungshülse 23 mit seiner Unterseite 31 auf dem Fahrzeugbauteil 5 auf, während der Schaft 27 die im Fahrzeugbauteil 5 vorgesehene erste Bauteilöffnung 33 mit Spiel durchragt. Die vorspringende Umfangschulter 29 erschwert zwar ein Einstecken der Dämpfungshülse 23 auf Grund ihres bezüglich der ersten Bauteilöffnung 33 größeren Umfanges, jedoch ermöglicht die keilförmige Abschrägung der Umfangschulter 29 gemeinsam mit der hohen Elastizität des Dämpfungshülsenmaterials insgesamt ein problemloses Einstecken der Dämpfungshülse 23 in die erste Bauteilöffnung 33. Die vorspringende Umfangschulter 29 hindert dabei die Dämpfungshülse 23 vor einem im Motorbetrieb und/oder durch Fahrgegebenheiten schwingungsbedingten Herauslösen aus der ersten Bauteilöffnung 33.

Die Innenkontur der mit einer Durchgangsöffnung versehenen Dämpfungshülse 23 ist bezüglich des Kegelstumpfabschnittes 17 und des sich anschließenden zylindrischen Abschnittes 19 entsprechend ausgebildet, das heißt, die Durchgangsöffnung weist einen konischen Abschnitt und einen sich daran anschließenden zylindrischen Abschnitt auf, wie aus Figur 3 ohne weiteres ersichtlich. In Einbaulage der vormontierten Baueinheit (Aggregat und Aggregat-Haltekonsole) liegt somit der Verankerungszapfen 15 flächig an der Innenkontur der Dämpfungshülse 23 an, wobei diese auf der dem Aggregat 3 abgewandten Stirnseite 35 des Dämpfungshülsenschaftes 27 eine Fase 37 aufweist, die in ihrer Form an einer an der dem Kegelstumpfabschnitt 17 zugewandten Stirnseite 39 des Sicherungsbundes 21 angebrachten Fase 41 entspricht. Diese ist steilkonisch mit über 60° Kegelwinkel ausgebildet und dient zum leichteren und sicheren Austritt des Sicherungsbundes 21 aus der Dämpfungshülse 23.

Der Sicherungsbund 21 selbst liegt mit seiner angefasten Stirnseite 39 an der Fase 37 der Dämpfungshülse 23 eng an und verhindert ein Auslösen der Baueinheit (Aggregat und Aggregat-Haltekonsole) aus der Dämpfungshülse 23. Auf der anderen Stirnseite 43 des Sicherungsbundes 21 ist eine weitere Fase 44 ausgebildet, die durch ihre keilartige Wirkung ein Hindurchdrücken des Sicherungsbundes 21 durch den zylindrischen Abschnitt der Innenkontur der Dämpfungshülse 23 erleichtert.

Festzuhalten bleibt, dass die Befestigungsstellen 9 und 11 so ausgebildet sind, dass beim Einführen des jeweiligen Verankerungszapfen 15 in die in der ersten Bauteilöffnung 33 angeordnete Dämpfungshülse 23 selbsttätig eine Formschlussverbindung zwischen Verankerungszapfen 15 und Dämpfungshülse 23 und somit zwischen Aggregat-Haltekonsole 7 und Fahrzeugbauteil 5 hergestellt ist. Bei der vorstehend beschriebenen Steckmontage zur Herstellung/Ausbildung der Befestigungsstellen ist also kein schrauben, nieten oder schweißen erforderlich, um die Aggregat-Haltekonsole 7 am Fahrzeugbauteil zu befestigen.

Wie aus Figur 1 ersichtlich, umfasst die dritte Befestigungsstelle 13 einen Verankerungszapfen 45, der als separates Bauteil ausgebildet ist, also nicht wie die anderen Verankerungszapfen 15 mit der Aggregat-Haltekonsole 7 einstückig ausgebildet ist. Der Verankerungszapfen 45 wirkt im montierten Zustand der Aggregat-Haltekonsole 7 ebenfalls mit einer in eine erste Bauteilöffnung 33 im Fahrzeugbauteil 5 eingesetzte Dämpfungshülse 23 in gleicher Weise wie vorstehend an der den Befestigungsstellen 9 und 11 zugeordneten Dämpfungshülsen 23 beschriebenen Weise zusammen.

Der Verankerungszapfen 45 durchgreift im montierten Zustand der Aggregat-Haltekonsole 7 eine in derselben vorgesehene zweite Bauteilöffnung 47, deren Längsmittelachse senkrecht zu den Längsmittelachsen der die Verankerungszapfen 15 aufnehmenden Bauteilöffnungen 33 verläuft, das heißt, die Steckrichtung des Verankerungszapfens 45 verläuft senkrecht zur Steckrichtung der beiden parallel zueinander verlaufenden Verankerungszapfen 15.

Die zweite Bauteilöffnung 47 ist an einem flachen Schenkelabschnitt 49 der Aggregat-Haltekonsole 7 vorgesehen, der auf seiner der Dämpfungshülse 23 zugewandten Flachseite mit einem einstückig an der Haltekonsole 7 ausgebildeten Zentrieransatz 51 versehen ist, der als Kegelstumpfabschnitt ausgebildet ist, wobei der Kegelwinkel des Zentrieransatzes 51 dem Kegelwinkel der Innenkontur der Dämpfungshülse 23 entspricht.

Der steckbar ausgebildete Verankerungszapfen 45 weist einen kreisscheibenförmigen Kopf 53 auf, an den sich ein durchmesserkleinerer, zylindrischer Längsabschnitt 55 anschließt, welcher mit einer Vertiefung 57 versehen ist, wodurch eine umlaufende Ringschulter 59 gebildet ist. Das freie Ende des Längsabschnitts 55 ist zum Zwecke der besseren Einführung in die Dämpfungshülse 23 abgeschrägt/angefast. Im montierten Zustand durchgreift der Verankerungszapfen 45 sowohl die zweite Bauteilöffnung 47 als auch die Dämpfungshülse 23, wobei die Ringschulter 59 am Verankerungszapfen 45 den Rand der Durchgangsöffnung der Dämpfungshülse 23 hintergreift und in Anlage mit der Stirnseite 35 der Dämpfungshülse 23 gelangt, wodurch ein Formschluss zwischen dem Verankerungszapfen 45 und der Dämpfungshülse 23 und somit zwischen Aggregat-Haltekonsole 7 und Fahrzeugbauteil 5 hergestellt ist.

Zum Zwecke der Montage des Aggregats 3 am Fahrzeugbauteil 5 wird vorzugsweise zunächst das Aggregat 3 mit der Aggregat-Haltekonsole 7 zu einer Baueinheit verbunden, was in einem Vormontageschritt erfolgen kann. Die identischen Dämpfungshülsen 23 der Befestigungsstellen 9 bis 13 werden in die dafür jeweils vorgesehene erste Bauteilöffnung 33 im Fahrzeugbauteil 5 eingesteckt und nehmen dabei die in Figur 3 dargestellte Einbaulage ein. Nachfolgend werden die an der Aggregat-Haltekonsole 7 angeformten Verankerungszapfen 15 in die jeweils dafür vorgesehene Dämpfungshülse 23 unter Ausbildung der Befestigungsstelle 9 beziehungsweise 11 eingeführt und zwar soweit, bis sie die in Figur 3 dargestellte Position erreichen und die Umfangsschulter 29 des Verankerungszapfens 15 den Rand der Durchgangsöffnung in der Dämpfungshülse 23 hintergreift, wodurch eine Formschlussverbindung hergestellt ist, die selbsttätig beim Einführen des Verankerungszapfen 15 in die Dämpfungshülse 23 ausgebildet wird. Die Aggregat-Haltekonsole 7 wird beim Einführen der Verankerungszapfen 15 in die jeweilige Dämpfungshülse 23 oder nachfolgend so entsprechend positioniert, dass der Zentrieransatz 51 in die Dämpfungshülse 23 eingreift und somit die zweite Bauteilöffnung 47 in fluchtender Anordnung mit der Durchgangsöffnung in der Dämpfungshülse 23 angeordnet ist. Anschließend wird zur unverrückbaren Befestigung der Aggregat-Haltekonsole 7 am Fahrzeugbauteil der Verankerungszapfen 45 in die zweite Bauteilöffnung 47 und in die Durchgangsöffnung der Dämpfungshülse 23 eingeführt, bis dessen Ringschulter 29 an der Stirnseite 35 der Dämpfungshülse 23 anliegt.

Für die Montage des Aggregats 3 am Fahrzeugbauteil 5 ist es alternativ zum oben beschriebenen Ausführungsbeispiel denkbar, in einer kinematischen Umkehr der Vorrichtung 1 die Verankerungszapfen 15 am Fahrzeugbauteil vorzusehen beziehungsweise auszubilden und die die Dämpfungshülsen 23 aufnehmenden ersten Bauteilöffnungen 33 an der Aggregat-Haltekonsole 7 vorzusehen.

Im Übrigen ist die erfindungsgemäße Vorrichtung 1 nicht nur zur geräuschentkoppelten, schwingungsdämpfenden Halterung eines Hydraulikaggregats einsetzbar, sondern kann auch im Zusammenhang mit anderen Aggregaten im Fahrzeug eingesetzt werden.

Anstelle der oben beschriebenen Dreipunktlagerung kann die Vorrichtung 1 alternativ auch lediglich zwei Befestigungsstellen oder mehr als drei Befestigungsstellen aufweisen, wobei jeweils mindestens eine der Befestigungsstellen einen als separates, vom Fahrzeugbauteil und der Aggregat-Haltekonsole entfernbares Bauteil ausgebildeten Verankerungszapfen 45 umfasst.

## Patentansprüche

1. Vorrichtung (1) zur schwingungsdämpfenden Halterung eines Aggregats (3) an einem Fahrzeugbauteil (5), mit mindestens zwei durch Steckmontage herstellbarer Befestigungsstellen (9,11,13), um eine Aggregat-Haltekonsole (7) am Fahrzeugbauteil (5) oder das Aggregat (3) an der am Fahrzeugbauteil (5) befestigten oder daran ausgebildeten Aggregat-Haltekonsole (7) lagefest zu befestigen, wobei die Steckrichtungen der beiden Befestigungsstellen (9,11,13) in nicht paralleler Richtung zueinander verlaufen und wobei mindestens eine der Befestigungsstellen (9,11,13) einen Verankerungszapfen (15,45) und eine in einer ersten Bauteilöffnung (33) angeordnete Dämpfungshülse (23) umfasst, in die der Verankerungszapfen (15,45) im montierten Zustand der Aggregat-Haltekonsole (7) eingesteckt ist,
**dadurch gekennzeichnet,**
**dass** der Verankerungszapfen (45) als separates Bauteil ausgeführt ist und im montierten Zustand der Aggregat-Haltekonsole (7) beziehungsweise des Aggregats (3) eine zweite Bauteilöffnung (47) durchgreift.

2. Vorrichtung nach Anspruch 1,
**dadurch gekennzeichnet,**
**dass** zumindest die den Verankerungszapfen (45) aufweisende Befestigungsstelle (13) so ausgebildet ist, dass beim Einführen des Verankerungszapfens (45) in die Dämpfungshülse (23) selbsttätig eine Kraftschlussverbindung und/oder eine Formschlussverbindung zwischen Verankerungszapfen (45) und Dämpfungshülse (23) und somit zwischen Aggregat-Haltekonsole (7) und Fahrzeugbauteil (5) beziehungsweise Aggregat (3) und Aggregat-Haltekonsole (7) hergestellt ist.

3. Vorrichtung nach Anspruch 1 oder 2,
**dadurch gekennzeichnet,**
**dass** die erste Bauteilöffnung (33) am Fahrzeugbauteil (5) und die zweite Bauteilöffnung (47) an der Aggregat-Haltekonsole (7) vorgesehen ist.

4. Vorrichtung nach Anspruch 1 oder 2,
**dadurch gekennzeichnet,**
**dass** die erste Bauteilöffnung (33) an der Aggregat-Haltekonsole (7) und die zweite Bauteilöffnung (47) am Fahrzeugbauteil (5) vorgesehen ist.

5. Vorrichtung nach einem der Ansprüche 1 bis 4,
**dadurch gekennzeichnet,**
**dass** die wenigstens eine andere Befestigungsstelle (9,11) auch einen Verankerungszapfen (15) umfasst, der an der Aggregat-Haltekonsole (7) fest angebracht oder einstückig ausgebildet ist.

6. Vorrichtung nach einem der Ansprüche 1 bis 5,
**dadurch gekennzeichnet,**
**dass** die mindestens zwei Verankerungszapfen (9,11,13) in senkrechter Richtung zueinander verlaufende Steckrichtungen aufweisen.

7. Vorrichtung nach einem der Ansprüche 1 bis 6,
**dadurch gekennzeichnet,**
**dass** drei Befestigungsstellen (9,11,13) vorgesehen sind, wobei die Verankerungszapfen ( 15) von zwei der Befestigungsstellen (9,11) parallel zueinander verlaufende Steckrichtungen aufweisen und die Steckrichtung des als separates Bauteil ausgebildeten dritten Verankerungszapfens (45) in senkrechter Richtung zur Steckrichtung der beiden anderen Verankerungszapfen (15) verläuft.

8. Vorrichtung nach einem der Ansprüche 1 bis 7,
**dadurch gekennzeichnet,**
**dass** alle Befestigungsstellen hinsichtlich der Anzahl und Ausgestaltung ihrer Teile identisch ausgebildet sind.

9. Vorrichtung nach einem der Ansprüche 1 bis 8,
**dadurch gekennzeichnet,**
**dass** an der Aggregat-Haltekonsole (7) oder am Fahrzeugbauteil (5) ein mit der Dämpfungshülse (23) zusammenwirkender Zentrieransatz (51) zur Ausrichtung der Aggregat-Haltekonsole (7) relativ gegenüber dem Fahrzeugbauteil (5) vorgesehen ist.

10. Vorrichtung nach Anspruch 9,
**dadurch gekennzeichnet,**
**dass** der Zentrieransatz (51) in die Dämpfungshülse (23) eingreift.

11. Vorrichtung nach Anspruch 9 oder 10,
**dadurch gekennzeichnet,**
**dass** die zweite Bauteilöffnung (47) den Zentrieransatz (51) durchdringt.

12. Vorrichtung nach einem der Ansprüche 9 bis 11,
**dadurch gekennzeichnet,**
**dass** der Zentrieransatz (51) konisch ausgebildet ist und sich in Richtung der Dämpfungshülse (23) hin verjüngt.
